# FASCICULE DE BREVET EUROPEEN

(11) **EP 1 910 102 B1**
(45) Date de publication et mention de la délivrance du brevet: **30.09.2009**
(21) Numéro de dépôt: 06762419.7
(22) Date de dépôt: 05.07.2006
(51) Int. Cl.: B60C 15/00

(54) **PNEUMATIQUE A MOBILITE ETENDUE AVEC FLANC SOUPLE**
EINE FLEXIBLE SEITENWAND UMFASSENDER NOTLAUFREIFEN
EXTENDED MOBILITY TYRE COMPRISING A FLEXIBLE SIDEWALL

(30) Priorité: 19.07.2005 FR 0507792
(43) Date de publication de la demande: 16.04.2008
(73) Titulaire: Société de Technologie Michelin, 63000 Clermont-Ferrand (FR); Michelin Recherche et Technique, 1763 Granges-Paccot (CH)
(72) Inventeur: CAGNEAUX, Guy, F-63830 Nohanent (FR); JANIN, Nicolas, F-63200 Riom (FR)
(74) Mandataire: Dequire, Philippe Jean-Marie Denis
(86) Numéro de dépôt international: PCT/EP2006/006553
(87) Numéro de publication internationale: WO 2007/009596

(56) Documents cités:
- EP-B- 0 748 287
- US-A1- 2004 194 865

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure du type montré par US-A-2004/194865. Ce type de conception est particulièrement adapté aux nouvelles générations de pneumatiques pouvant être utilisés, dans certaines limites, dans des conditions de faible pression, voire de pression nulle ou quasi-nulle, avec une élimination du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets sont susceptibles de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Le document EP 0 673 324 décrit un ensemble roulant comprenant au moins un pneumatique à armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante. Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

Le document EP 0 748 287 décrit une solution permettant une première optimisation de la technologie de base décrite dans le document EP 0 673 324 préalablement cité. Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

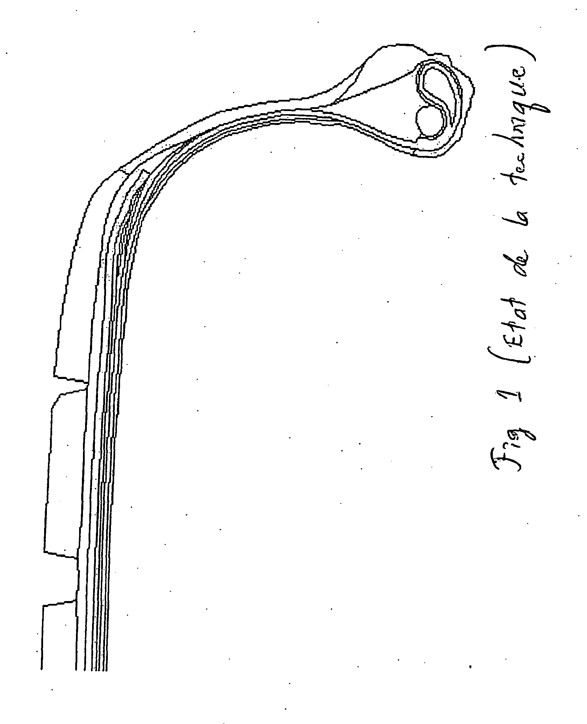

Le document WO 95/23073 décrit un pneumatique à mobilité étendue comportant une zone basse optimisée, offrant un bon compromis entre la facilité de montage et la résistance au décoincement . La figure 1 du présent document présente par ailleurs un mode de réalisation bien connu de cette zone basse. Selon cet agencement, la zone du bourrelet située radialement extérieurement à la tringle forme un triangle constitué d'un mélange caoutchoutique à haut module. Ce triangle occupe une portion importante du bourrelet et s'étend radialement extérieurement très au-delà de la tringle. La présence de ce type d'ancrage a pour conséquence une importante rigidification du bourrelet d'une part et du flanc d'autre part. Ainsi, en fonctionnement, la portion utile du flanc est réduite.

La présente invention propose donc de pallier les différents inconvénients inhérents aux solutions exposées ci-dessus.

Pour ce faire, elle prévoit un pneumatique pour roue de véhicule, comprenant:
- deux flancs espacés axialement l'un de l'autre, réunis à leurs portions radialement extérieures par une zone de sommet pourvue sur sa portion radialement extérieure d'une bande de roulement circonférentielle ;
- des bourrelets, disposés radialement intérieurement à chacun des flancs, chaque bourrelet comportant un siège et un rebord externe destinés à venir en contact avec une jante adaptée ;
- une structure de renfort s'étendant sensiblement radialement depuis chacun des bourrelets, le long des flancs, vers la zone sommet ;
- au moins un desdits bourrelets comprenant :
- un siège de bourrelet comportant une génératrice dont l'extrémité axialement intérieure est sur un cercle de diamètre supérieur au diamètre du cercle sur lequel se trouve l'extrémité axialement extérieure ;
- une tringle ;
- une zone d'ancrage de la structure de renfort dans ledit bourrelet, comprenant un retournement de ladite structure de renfort de type carcasse autour de ladite tringle, radialement intérieurement à celle-ci, depuis le côté axialement intérieur vers le côté axialement extérieur à la tringle ;
- une zone d'appui, radialement sensiblement voisine et axialement extérieure à ladite tringle, ladite zone d'appui étant constituée d'une mélange caoutchoutique de sensiblement haut module (de préférence supérieur à 40 MPa):
- une zone de fermeture d'ancrage, sensiblement radialement extérieure à la tringle, dont l'emplacement est défini d'une part par un axe imaginaire de tringle At, sensiblement axial, et passant sensiblement radialement extérieurement à ladite tringle, et d'autre part un axe imaginaire alpha, passant sensiblement radialement extérieurement à la zone d'appui et présentant un angle alpha inférieur à 50° et de préférence inférieur à 45°, ledit angle alpha étant mesuré entre l'axe de tringle et ledit axe alpha, en se dirigeant dans le sens horaire.

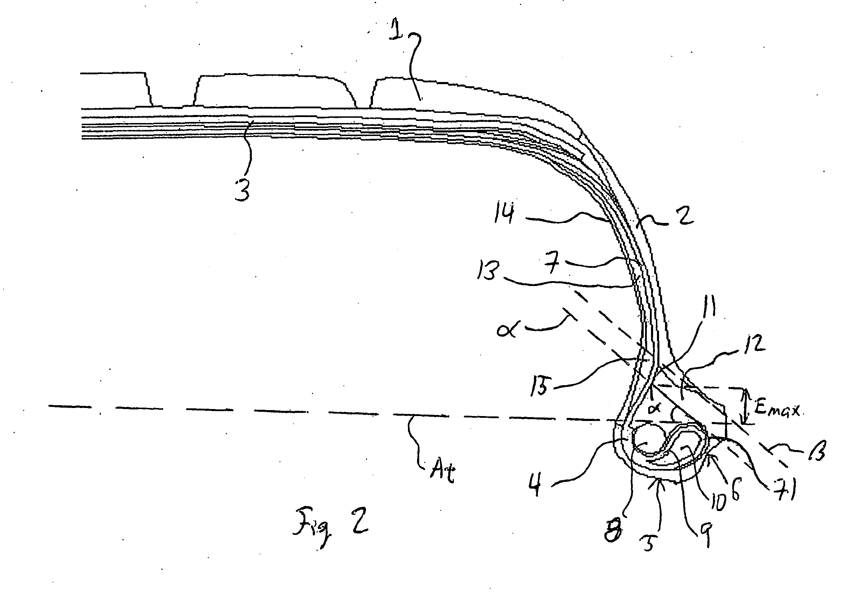

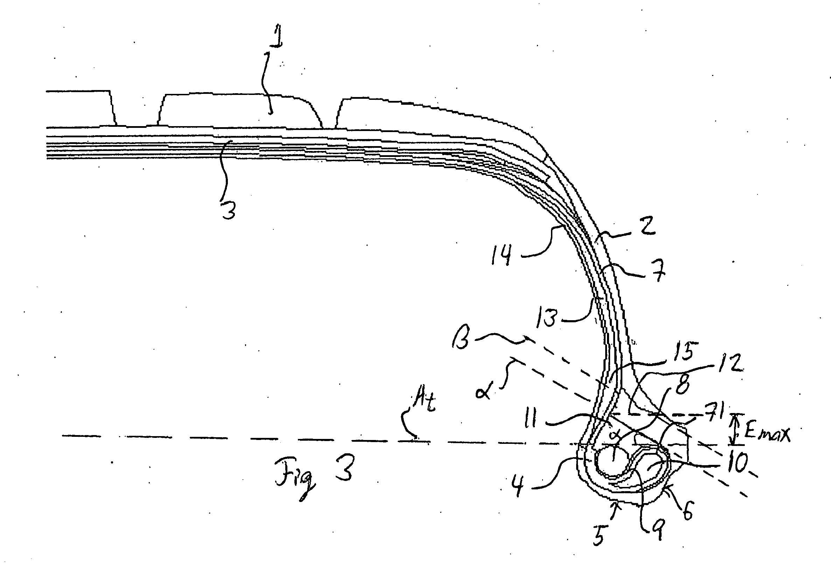

Un tel agencement du pneumatique permet d'augmenter le niveau de souplesse des flancs. En pratique, la portion utile du flanc est augmentée. Ainsi, il est possible d'utiliser le pneumatique avec une flèche plus importante lors de roulage en condition de pression réduite. De manière encore plus préférentielle, l'angle alpha est inférieur ou égal à 40° ; par exemple, dans le mode de réalisation de la figure 2, il est d'environ 40°, tandis que dans le mode de réalisation de la figure 3, il est autour de 30°.

Selon un mode de réalisation avantageux, la zone d'appui est entourée ou enveloppée par la portion retournée de la structure de renfort de type carcasse, qui repasse une seconde fois au voisinage de la zone radialement intérieure à la tringle.

De manière avantageuse, l'épaisseur Emax de la zone de fermeture d'ancrage est inférieure ou égale à 1.5 fois le diamètre de la tringle, et de préférence inférieure ou égale à 1.0 fois le diamètre de la tringle.

De manière avantageuse, ledit bourrelet comporte par ailleurs une zone libre, radialement extérieure à la zone de fermeture d'ancrage, et dont le profil est défini d'une part par l'axe alpha, et d'autre part par un axe bêta, sensiblement parallèle à l'axe alpha, et radialement extérieur à celui-ci.

Grâce à la présence de cette zone libre, le portion radialement extérieure du bourrelet est assouplie, rendant de ce fait le flanc d'autant plus souple. Une telle solution, utilisée dans un ensemble monté adapté pour rouler sur une distance donnée à pression réduite ou nulle, permet d'augmenter le rayon d'action.

Ladite zone libre s'étend de préférence depuis une portion radialement extérieure de la zone d'appui vers la structure de renfort de type carcasse. Elle comporte de préférence une épaisseur sensiblement constante sur la largeur de son profil.

Egalement de manière avantageuse, le pneumatique comprend par ailleurs une couche intermédiaire de mélange caoutchoutique disposée entre la structure de renfort et le mélange caoutchoutique interne d'étanchéité, l'épaisseur de ladite couche étant adaptée de sorte que la structure de renfort chemine, depuis la portion radialement intérieure du flanc au moins jusqu'à mi-hauteur de celui-ci, sensiblement en zone médiane du flanc.

Grâce à une telle couche intermédiaire, on obtient un centrage de la structure de renfort sensiblement en fibre neutre. Un tel positionnement permet une excellente gestion des contraintes, et donc une bonne endurance. De manière préférentielle, le positionnement de la structure de renfort en fibre neutre se prolonge radialement extérieurement au-delà de la mi-hauteur du flanc et avantageusement jusqu'à l'épaule.

L'épaisseur de la couche intermédiaire est avantageusement supérieure dans la zone radialement inférieure du flanc de façon à ce que, radialement extérieurement et à proximité immédiate de la zone dans laquelle la structure de renfort coopère avec la zone de fermeture d'ancrage, ladite structure de renfort soit axialement sensiblement alignée avec une zone centrale de la tringle.

Grâce à une telle configuration, la structure de renfort forme, sensiblement au niveau de la zone de fermeture d'ancrage, une « avancée » axiale vers l'extérieur, ce qui a pour effet, d'une part d'accentuer la courbure de la structure de renfort, et d'autre part de prolonger le parcours de cette structure en zone neutre. Par ailleurs, cette zone de courbure prononcée de la structure de renfort permet, notamment en mode de roulage à pression réduite, d'obtenir une flexion plus importante du flanc du pneumatique.

D'autres caractéristiques et avantages de l'invention apparaîtront à la lecture des exemples de réalisation du pneumatique conforme à l'invention, donnés à titre non limitatif et en se référant aux figures 1 à 3 annexées, dans lesquelles:
la figure 1 illustre, en coupe transversale, un pneumatique de type connu, en particulier l'agencement de la zone basse de ce pneumatique;
la figure 2 illustre, en coupe transversale, un pneumatique selon l'invention;
la figure 3 illustre, en coupe transversale, une variante d'un pneumatique selon l'invention.

Dans la présente description, on entend par structure radiale, un agencement à 90 degrés, mais aussi, selon l'usage, à un angle proche de 90°.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'élasticité" d'un mélange caoutchoutique, un module d'extension sécant obtenu à une déformation d'extension uniaxiale de l'ordre de 10% à température ambiante.

La figure 1 présente un exemple d'un pneumatique spécialement adapté pour roulage en mode dégradé de type connu. Selon ce mode de réalisation, le bourrelet comporte un ancrage de la structure de renfort par retournement de cette dernière autour de la tringle et une zone d'appui, adjacente à la tringle. Par ailleurs, la zone du bourrelet située radialement extérieurement à la tringle forme un triangle constitué d'un mélange caoutchoutique à haut module. Ce triangle occupe une portion importante du bourrelet et s'étend radialement extérieurement très au-delà de la tringle.

La figure 2 illustre, en coupe transversale, un pneumatique 1 selon l'invention. Ce pneumatique comprend des flancs 2 adjacents à des bourrelets 4. Un sommet 3, sur lequel est prévue une bande de roulement, assure la jonction entre les flancs. Le sommet comporte de préférence au moins une ceinture de renfort.

Le pneumatique comporte une structure de renfort de type carcasse 7, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité 71 de la structure de renfort 7 sont situées dans les bourrelets. Chaque bourrelet comporte un siège 5 et un rebord externe 6 destinés à venir en contact avec une jante adaptée : afin de favoriser le roulage en mode dégradé, le siège 5 de bourrelet comporte une génératrice dont l'extrémité axialement intérieure est sur un cercle de diamètre supérieur au diamètre du cercle sur lequel se trouve l'extrémité axialement extérieure.

Chaque bourrelet comporte par ailleurs une zone d'ancrage 9 sensiblement circonférentielle et comprenant une tringle 8 contre laquelle la portion d'extrémité 71 de la structure de renfort est retournée. La tringle 8 est destinée d'une part à procurer un ancrage de la structure de renfort 7 et d'autre part le serrage du pneumatique lorsque ce dernier est monté sur une jante adaptée.

Le bourrelet comporte également une zone d'appui 10, située axialement extérieurement à la tringle et dont le profil forme une sorte de goutte d'eau allongée dont la pointe se prolonge sous la tringle 8 et le corps est radialement adjacent et axialement extérieur à la tringle. Cette zone d'appui est constituée d'un mélange caoutchoutique à sensiblement haut module (de préférence supérieur à 40 MPa, et pouvant aller au-delà de 60 Mpa). Tel qu'illustré, la zone d'appui est de préférence enveloppée par la portion retournée de la structure de renfort de type carcasse, qui repasse une seconde fois au voisinage de la zone radialement intérieure à la tringle, après avoir enveloppé la zone d'appui 10.

La zone d'ancrage 9 de la structure de renfort comprend un retournement de ladite structure de renfort autour de ladite tringle, radialement intérieurement à celle-ci, depuis le côté axialement intérieur vers le côté axialement extérieur à la tringle.

Radialement extérieurement à la zone d'ancrage, on retrouve une zone de fermeture d'ancrage 11, sensiblement radialement extérieure à la tringle 8, dont l'emplacement est défini d'une part par un axe imaginaire de tringle At, sensiblement axial, et passant sensiblement radialement extérieurement à ladite tringle 8, et d'autre part un axe imaginaire alpha, passant sensiblement radialement extérieurement à la zone d'appui 10 et présentant un angle alpha inférieur à 50° et de préférence inférieur à 45°, ledit angle alpha étant mesuré entre l'axe de tringle et ledit axe alpha, en se dirigeant dans le sens horaire. Le module de la zone de fermeture d'ancrage se situe avantageusement entre 10 et 25 Mpa, et de préférence entre 18 et 22 Mpa.

Par ailleurs, l'épaisseur Emax de la zone de fermeture d'ancrage 11 permet de vérifier la relation suivante : Emax ≤ 1.5 D et plus préférentiellement Emax ≤ 1.0 D.

La limitation de l'angle alpha permet de libérer une partie de la zone radialement extérieure à la zone de fermeture d'ancrage, pour créer une zone libre 12, dont le profil est défini d'une part par l'axe alpha, et d'autre part par un axe bêta, sensiblement parallèle à l'axe alpha, et radialement extérieur à celui-ci. La zone libre s'étend depuis une portion radialement extérieure de la zone d'appui vers la structure de renfort de type carcasse. Elle comporte de préférence une épaisseur sensiblement constante sur la largeur de son profil. Le module de la zone libre se situe avantageusement entre 7 et 15 Mpa.

Selon un autre aspect de l'invention, l'angle opposé à l'angle alpha est également limité, de façon à permettre à la structure de renfort de se positionner axialement en alignement radial avec la tringle avant de quitter le bourrelet pour le flanc. La structure de renfort est donc placée en fibre neutre. Afin de prolonger cet alignement favorable dans le flanc, une couche intermédiaire 13, 15 de mélange caoutchoutique est disposée entre la structure de renfort et le mélange caoutchoutique interne d'étanchéité, l'épaisseur de ladite couche étant adaptée de sorte que la structure de renfort chemine, depuis la portion radialement intérieure du flanc au moins jusqu'à mi-hauteur de celui-ci, sensiblement en zone médiane. L'épaisseur de cette couche intermédiaire est supérieure dans la zone radialement inférieure du flanc de façon à ce que, radialement extérieurement et à proximité immédiate de la zone dans laquelle la structure de renfort coopère avec la zone de fermeture d'ancrage 11, ladite structure de renfort soit axialement sensiblement alignée avec une zone centrale de la tringle 8. Le module de la couche intermédiaire 15 se situe avantageusement entre 5 et 8 Mpa.

## Revendications

1. Pneumatique (1) pour roue de véhicule, comprenant:
- deux flancs (2) espacés axialement l'un de l'autre, réunis à leurs portions radialement extérieures par une zone de sommet (3) pourvue sur sa portion radialement extérieure d'une bande de roulement circonférentielle ;
- des bourrelets (4), disposés radialement intérieurement à chacun des flancs, chaque bourrelet comportant un siège (5) et un rebord externe (6) destinés à venir en contact avec une jante adaptée ;
- une structure de renfort (7) s'étendant sensiblement radialement depuis chacun des bourrelets (4), le long des flancs (2), vers la zone sommet (3);
- au moins un desdits bourrelets comprenant :
- un siège de bourrelet (5) comportant une génératrice dont l'extrémité axialement intérieure est sur un cercle de diamètre supérieur au diamètre du cercle sur lequel se trouve l'extrémité axialement extérieure ;
- une tringle (8) ;
- une zone d'ancrage (9) de la structure de renfort dans ledit bourrelet, comprenant un retournement de ladite structure de renfort de type carcasse autour de ladite tringle (8), radialement intérieurement à celle-ci, depuis le côté axialement intérieur vers le côté axialement extérieur à la tringle ;
- une zone d'appui (10), radialement sensiblement voisine et axialement extérieure à ladite tringle, ladite zone d'appui étant constituée d'une mélange caoutchoutique de sensiblement haut module (de préférence supérieur à 40 MPa),
ledit pneumatique étant **caractérisé en ce qu'**il comprend une zone de fermeture d'ancrage (11), sensiblement radialement extérieure à la tringle (8), dont l'emplacement est défini d'une part par un axe imaginaire de tringle (At), sensiblement axial, et passant sensiblement radialement extérieurement à ladite tringle (8), et d'autre part un axe imaginaire alpha, passant sensiblement radialement extérieurement à la zone d'appui (10) et présentant un angle alpha inférieur à 50° et de préférence inférieur à 45°, ledit angle alpha étant mesuré entre l'axe de tringle (At) et ledit axe alpha, en se dirigeant dans le sens horaire.

2. Pneumatique pour roue de véhicule selon la revendication 1, dans lequel l'épaisseur Emax de la zone de fermeture d'ancrage est inférieure ou égale à 1.5 fois le diamètre de la tringle, et de préférence inférieure ou égale à 1.0 fois le diamètre de la tringle.

3. Pneumatique pour roue de véhicule selon l'une des revendications 1 ou 2, dans lequel ledit bourrelet comporte par ailleurs une zone libre (12), radialement extérieure à la zone de fermeture d'ancrage, et dont le profil est défini d'une part par l'axe alpha, et d'autre part par un axe bêta, sensiblement parallèle à l'axe alpha, et radialement extérieur à celui-ci.

4. Pneumatique pour roue de véhicule selon la revendication 3, dans lequel ladite zone libre s'étend depuis une portion radialement extérieure de la zone d'appui vers la structure de renfort de type carcasse.

5. Pneumatique pour roue de véhicule selon la revendication 4, dans lequel ladite zone libre comporte une épaisseur sensiblement constante sur la largeur de son profil.

6. Pneumatique pour roue de véhicule selon l'une des revendications précédentes, comprenant par ailleurs une couche intermédiaire (13, 15) de mélange caoutchoutique disposée entre la structure de renfort (7) et le mélange caoutchoutique interne (14) d'étanchéité, l'épaisseur de ladite couche (13) étant adaptée de sorte que la structure de renfort chemine, depuis la portion radialement intérieure du flanc au moins jusqu'à mi-hauteur de celui-ci, sensiblement en zone médiane du flanc.

7. Pneumatique pour roue de véhicule selon la revendication 6, dans lequel l'épaisseur de la couche intermédiaire (13, 15) est supérieure dans la zone (15) radialement inférieure du flanc de façon à ce que, radialement extérieurement et à proximité immédiate de la zone dans laquelle la structure de renfort coopère avec la zone de fermeture d'ancrage (11), ladite structure de renfort est axialement sensiblement alignée avec une zone centrale de la tringle (8).

## Claims

1. A tyre (1) for a vehicle wheel, comprising:
- two sidewalls (2) spaced apart axially from each other, joined at their radially outer portions by a crown zone (3) provided on its radially outer portion with a circumferential tread;
- beads (4), arranged radially to the inside of each of the sidewalls, each bead comprising a seat (5) and an outer flange (6) which are intended to come into contact with a suitable rim;
- a reinforcement structure (7) extending substantially radially from each of the beads (4), along the sidewalls (2), towards the crown zone (3);
- at least one of said beads comprising:
- a bead seat (5) comprising a generatrix the axially inner end of which is located on a circle of diameter greater than the diameter of the circle on which the axially outer end is located;
- a bead wire (8);
- a zone (9) for anchoring the reinforcement structure in said bead, comprising an upturn of said carcass-type reinforcement structure around said bead wire (8), radially to the inside thereof, from the axially inner side towards the side axially external to the bead wire;
- a bearing zone (10), radially substantially close to and axially external to said bead wire, said bearing zone consisting of a rubber mix of substantially high modulus (preferably greater than 40 MPa);
said tyre being **characterised in that** it comprises an anchoring closure zone (11), substantially radially to the outside of the bead wire (8), the location of which is defined on one hand by an imaginary bead wire axis (At), which is substantially axial and passes substantially radially externally to said bead wire (8), and on the other hand an imaginary axis alpha, which passes substantially radially externally to the bearing zone (10) and has an angle alpha of less than 50° and preferably less than 45°, said angle alpha being measured between the bead wire axis (At) and said axis alpha, in a clockwise direction.

2. A tyre for a vehicle wheel according to Claim 1, in which the thickness Emax of the anchoring closure zone is less than or equal to 1.5 times the diameter of the bead wire, and preferably less than or equal to 1.0 times the diameter of the bead wire.

3. A tyre for a vehicle wheel according to one of Claims 1 or 2, in which said bead furthermore comprises a free zone (12), radially to the outside of the anchoring closure zone, the profile of which is defined on one hand by the axis alpha, and on the other hand by an axis beta, substantially parallel to the axis alpha, and radially external thereto.

4. A tyre for a vehicle wheel according to Claim 3, in which said free zone extends from a radially outer portion of the bearing zone towards the carcass-type reinforcement structure.

5. A tyre for a vehicle wheel according to Claim 4, in which said free zone comprises a thickness which is substantially constant over the width of its profile.

6. A tyre for a vehicle wheel according to one of the preceding claims, furthermore comprising an intermediate layer (13, 15) of rubber mix arranged between the reinforcement structure (7) and the internal sealing rubber mix (14), the thickness of said layer (13) being adapted such that the reinforcement structure passes, from the radially inner portion of the sidewall at least as far as mid-height thereof, substantially in the median zone of the sidewall.

7. A tyre for a vehicle wheel according to Claim 6, in which the thickness of the intermediate layer (13, 15) is greater in the radially lower zone (15) of the sidewall such that, radially externally and in the immediate proximity of the zone in which the reinforcement structure cooperates with the anchoring closure zone (11), said reinforcement structure is axially substantially aligned with a central zone of the bead wire (8).

## Patentansprüche

1. Luftreifen (1) für ein Fahrzeugrad, der aufweist:
- zwei Flanken (2) mit axialem Abstand zueinander, die in ihren radial äußeren Abschnitten durch eine Scheitelzone (3) vereint werden, welche in ihrem radial äußeren Abschnitt mit einer Umfangslauffläche versehen ist;
- Wülste (4), die bezüglich jeder der Flanken radial innen angeordnet sind, wobei jeder Wulst einen Sitz (5) und einen äußeren Rand (6) aufweist, die dazu bestimmt sind, mit einer geeigneten Felge in Kontakt zu kommen;
- eine Verstärkungsstruktur (7), die sich im Wesentlichen radial von jedem der Wülste (4) entlang der Flanken (2) zur Scheitelzone (3) erstreckt;
wobei mindestens einer der Wülste Folgendes aufweist:
- einen Wulstsitz (5) mit einer Mantellinie, deren axial inneres Ende sich auf einem Kreis mit einem größeren Durchmesser als dem Durchmesser des Kreises befindet, auf dem sich das axial äußere Ende befindet;
- einen Wulstkern (8);
- eine Verankerungszone (9) der Verstärkungsstruktur im Wulst, die einen Umschlag der Verstärkungsstruktur vom Typ Karkasse um den Wulstkern (8) aufweist, und zwar radial innerhalb des Wulstkerns, und die sich von der axial innerhalb zur axial außerhalb des Wulstkerns liegenden Seite erstreckt;
- eine Auflagezone (10), radial im Wesentlichen benachbart zum und axial außerhalb bezüglich des Wulstkerns, wobei die Auflagezone aus einer Kautschukmischung mit einem deutlich hohen Modul (vorzugsweise höher als 40 MPa) besteht,
wobei der Luftreifen **dadurch gekennzeichnet ist, dass** er eine Verankerungsschließzone (11) im Wesentlichen radial außen bezüglich des Wulstkerns (8) aufweist, deren Lage einerseits durch eine im Wesentlichen axiale imaginäre Wulstkernachse (At), die im Wesentlichen radial außen bezüglich des Wulstkerns (8) verläuft, und andererseits durch eine imaginäre Alpha-Achse definiert wird, die im Wesentlichen radial außen bezüglich der Auflagezone (10) verläuft und einen Winkel Alpha geringer als 50° und vorzugsweise geringer als 45° hat, wobei der Winkel Alpha zwischen der Wulstkernachse (At) und der Alpha-Achse im Uhrzeigersinn gemessen wird.

2. Luftreifen für ein Fahrzeugrad nach Anspruch 1, bei dem die Dicke Emax der Verankerungsschließzone geringer als oder gleich 1,5 mal der Durchmesser des Wulstkerns und vorzugsweise geringer als oder gleich 1,0 mal der Durchmesser des Wulstkerns ist.

3. Luftreifen für ein Fahrzeugrad nach einem der Ansprüche 1 oder 2, bei dem der Wulst außerdem eine freie Zone (12) radial außen bezüglich der Verankerungsschließzone aufweist, deren Profil einerseits von der Alpha-Achse und andererseits von einer Beta-Achse im Wesentlichen parallel zur Alpha-Achse und radial außen bezüglich dieser definiert wird.

4. Luftreifen für ein Fahrzeugrad nach Anspruch 3, bei dem die freie Zone sich von einem radial äußeren Abschnitt der Auflagezone zur Verstärkungsstruktur vom Typ Karkasse erstreckt.

5. Luftreifen für ein Fahrzeugrad nach Anspruch 4, bei dem die freie Zone eine über die Breite ihres Profils im Wesentlichen konstante Dicke aufweist.

6. Luftreifen für ein Fahrzeugrad nach einem der vorhergehenden Ansprüche, der außerdem eine Zwischenschicht (13, 15) aus einer Kautschukmischung aufweist, die zwischen der Verstärkungsstruktur (7) und der inneren Dichtungs-Kautschukschicht (14) angeordnet ist, wobei die Dicke der Schicht (13) so angepasst ist, dass die Verstärkungsstruktur vom radial inneren Abschnitt der Flanke mindestens bis zu deren halber Höhe im Wesentlichen in der mittleren Zone der Flanke verläuft.

7. Luftreifen für ein Fahrzeugrad nach Anspruch 6, bei dem die Dicke der Zwischenschicht (13, 15) in der radial unteren Zone (15) der Flanke größer ist, so dass radial außen und in direkter Nähe der Zone, in der die Verstärkungsstruktur mit der Verankerungsschließzone (11) zusammenwirkt, die Verstärkungsstruktur axial im Wesentlichen mit einer zentralen Zone des Wulstkerns (8) fluchtet.
